# EUROPEAN PATENT APPLICATION

(11) **EP 4 016 319 A1**
(43) Date of publication of application: **22.06.2022**
(21) Application number: 22155282.1
(22) Date of filing: 26.03.2015
(51) Int. Cl.: G06F 15/16, G06Q 10/06, G06Q 10/10, G06Q 50/00, G06Q 10/00

(54) **METHOD AND SYSTEM FOR CONTROLLING ROBOTIC AGENTS**

(30) Priority: 27.03.2014 IL 23175014
(62) Divisional of application: 15768308.7
(71) Applicant: Brillianetor Ltd, 52491 Ramat- Gan (IL)
(72) Inventor: HADAD SEGEV, Meirav, 52491 Gan (IL)
(74) Representative: Kramer, Dani

(57) **Abstract**

A method for creating a subnetwork within a computerized network is provided. The method includes forming a computerized component representative of an agent linked to the network, the computerized component including first data relating to an environment state of the agent, second data relating to at least one desire of the agent, and third data relating to at least one capability of the agent; and providing the computerized component with an ability to link to other computerized components to form subnetworks with the at least one computerized component in accordance with the first second and third data.

## Description

### FIELD OF THE DISCLOSURE

The present invention relates to social networks generally and in particular to a method and a system for controlling robotic agents.

### BACKGROUND ART

References considered to be relevant as background to the presently disclosed subject matter are listed below:
1. [hereinafter Amir2014] Amir, O. and Gal, K. "Plan Recognition and Visualization in Exploratory Learning Environments." Educational Data Mining. Springer International Publishing, 2014. 289-327.
2. [hereinafter Banerjee2014] Banerjee, B.; Lyle, J. and Kraemer, L. "The complexity of multi-agent plan recognition." Autonomous Agents and Multi-Agent Systems(2014): 1-33.
3. [hereinafter Banerjee2011] Banerjee, B. and Kraemer, L. "Branch and Price for Multi-Agent Plan Recognition." AAAI. 2011.
4. [hereinafter Banerjee2010] Banerjee, B.; Kraemer, L. and Lyle, J. "Multi-Agent Plan Recognition: Formalization and Algorithms." AAAI. 2010.
5. [hereinafter Castel1998] Castelfranchi, C.; Falcone, R.; and De-Rosis, F. Deceiving in golem: How to strategically pilfer help. In Autonomous Agent '98: Working notes of the Workshop on Deception, Fraud and Trust in Agent Societies, 1998.
6. [hereinafter Castel1997] Castelfranchi, C.; Fiorella, D.; Rino, F.; and Salvatore, P. A test-bed for investigating personality-based multiagent cooperation. In Proceedings of ESSLLI'97 Symposium on Logical Approaches to Agent Modelling and Design, pages pp.23-35, Aix-en-Provence, France, August 1997.
7. [hereinafter Chalamish2011] Chalamish, M. and Kraus, S. AutoMed - An Automated Mediator for Multi-Issue Bilateral Negotiations, Journal of Autonomous Agents and Multi-Agent System, 2011.
8. [hereinafter Gal2010] Gal, Y.; Kraus, S.; Gelfand, M.; Khashan, H. and Salmon, E. Negotiating with People across Cultures using an Adaptive Agent, ACM Transactions on Intelligent Systems and Technology, 2010.
9. [hereinafter Ghallab2004] Ghallab, M.: Nau, D. and Traverso, P. Automated Planning: Theory & Practice. Morgan Kaufmann, San Francisco. CA, USA, 2004.
10. [hereinafter Glass2000] Glass. A. and Grosz, B. Socially conscious decision-making. In Carles Sierra, Maria Gini, and Jeffrey S. Rosenschein, editors. Proceedings of the Fourth International Conference on Autonomous Agents, pages 217-224, Barcelona. Catalonia, Spain, 2000. ACM Press.
11. [hereinafter Gratch2004] Gratch, J. and Marsella, S. A domain-independent framework for modeling emotion. Cognitive Systems Research, 5(4), 269-306, 2004.
12. [hereinafter Grosz1996] Grosz, B. J. and Kraus, S. Collaborative plans for complex group action. Artificial Intelligence Journal. 86(2):269-357, 1996.
13. [hereinafter Grosz1999] Grosz, B.J. and Kraus, S. The evolution of SharedPlans. In Rao, A. and Wooldridge, M., editors, Foundations and Theories of Rational Agency. Kluwer Academic Publishers. 227-262, 1999.
14. [hereinafter Grosz2004] Grosz. B.; Kraus. S.; Talman, S.; Stossel, B. and Havlin, M. The influence of social dependencies on decision-making: Initial investigations with a new game. In Proceedings of AAMAS-2004.
15. [hereinafter Hadad1999] Hadad, M. and Kraus, S. SharedPlans in electronic commerce. In Klusch, Matthias, editor, Intelligent Information Agents. Berlin. Springer Publishers. 204-231, 1999
16. [hereinafter Hadad2001] Hadad, M. and Kraus, S. A mechanism for temporal reasoning by collaborative agents. Lecture Notes in Artificial Intelligence vol. 2446, Springer-Verlag. 229-234, 2001.
17. [hereinafter Hadad2002] Hadad, M. and Kraus, S. Exchanging and combining temporal information by collaborative agents. Lecture Notes in Artificial Intelligence vol. 2182. Springer-Verlag, 279-286, 2002.
18. [hereinafter Hadad2003] Hadad. M.; Kraus, S.: Gal, Y. and Lin. R. Time reasoning for a collaborative planning agent in a dynamic environment. Annals of Math. and Al 37(4):331-380, 2003.
19. [hereinafter Hadad2005] Hadad, M.; Annon-Kest. G.; Kaminka, G. and Kraus, S. Supporting Collaborative Activity. In Proceedings of Twentieth National Conference on Artificial Intelligence, 2005.
20. [hereinafter Hadad2008] Hadad, M.; Fridman, N. and Annon-Kest. G. AMIaGO: Autonomous Multiple Intelligent-Agents with Goal Orientation. In ECAI-08 Proceedings System Demonstration. 2008.
21. [hereinafter Hadad2011] Hadad, M. and Rosenfeld, A. ADAPT: Abstraction Hierarchies to Succinctly Model Teamwork. In Proceedings of Joint International Conference on Autonomous Agents and Multi Agents Systems, 2011.
22. [hereinafter Hadad2014] Hadad. M.; Kraus, S.; Ben-Arroyo Hartman, 1. and Rosenfeld, A. Group planning with time constraints has now been published in the following paginated issue of Annals of Mathematics and Artificial Intelligence: Volume 69, Issue 3. Page 243-291, 2014.
23. [hereinafter Hastings 1970] Hastings, W. K. Monte Carlo sampling methods using Markov chains and their applications. Biometrika, 57:97-109, 1970.
24. [hereinafter Hoang2005] Hoang, H.: Lee-Urban, S.; and Muoz-Avila, H. Hierarchical plan representations for encoding strategic game Al. In AIIDE-05. AAAI Press, 2005.
25. [hereinafter Hogg2001] Hogg. L. M.; and Jennings, N. R.; Socially intelligent reasoning for autonomous agents. IEEE Transactions on Systems, Man and Cybernetics - Part A. vol. 31, no. 5, pp. 381 399, 2001.[Jennings1995] Jennings, N. R. Controlling cooperative problem solving in industrial multi-agent systems using joint intentions. Artificial Intelligence, 75(2):1--46, 1995.
26. [hereinafter Kaminka2002] Kaminka , G. A.; Pynadath, D. V.; and Tambe, M. Monitoring teams by overhearing: A multi-agent plan recognition approach. Journal of Artificial Intelligence Research. 17, 2002.
27. [hereinafter Katz2008] Katz, R.; Amichai-Hamburger, Y.; Manisterski E.; and Kraus. S.: Different Orientations of Males and Females in Computer-Mediated Negotiation. Computers in human behavior journal, 24(2):516-534, 2008.
28. [hereinafter Kinny1994] Kinny, D.; Ljungberg, M; Rao.A. S.; Sonenberg. E.; Tidhar G.; and Werner, E. Planned team activity. In C. Castelfranchi and E. Werner, editors, Artificial Social Systems, Lecture Notes in Artificial Intelligence vol. 830, Springer-Verlag,. 279-286, 1994.
29. [hereinafter Kraus2000] Kraus, S. Strategic Negotiation in Multiagent Environments. MIT Press, 2000.
30. [hereinafter Lan2012] Lan, T.; Sigal, L.; and Mori, G. "Social roles in hierarchical models for human activity recognition." Computer Vision and Pattern Recognition (CVPR), 2012 IEEE Conference on. IEEE. 2012.
31. [hereinafter Levesque1990] Levesque, H.; Cohen, P.; and Nunes, J. On acting together. In Proceedings of the National Conference on Artificial Intelligence, pages 94-99, 1990.
32. [hereinafter Lin2008] Lin, R.; Kraus. S.; Wilkenfeld, J. and Barry, J. Negotiating with Bounded Rational Agents in Environments with Incomplete Information Using an Automated Agent, Artificial Intelligence journal, 172(6-7):823-851, 2008.
33. [hereinafter Lin2010] Lin. R. and Kraus, S. Can Automated Agents Proficiently Negotiate With Humans? Communications of the ACM Vol. 53 No. 1, Pages 78-88. January, 2010
34. [hereinafter Lin 2011] Lin, R.; Gev, Y. and Kraus, S. Bridging the Gap: Face-to-Face Negotiations with Automated Mediator, IEEE Intelligent Systems, 2011
35. [hereinafter Marhasev2009] Marhasev, E.; Hadad, M.; Kaminka, K. and Feintuch, U. "The use of hidden semi-Markov models in clinical diagnosis maze tasks." Intelligent Data Analysis 13.6 (2009): 943-967.
36. [hereinafter Monahan1982] G. E Monahan. A survey of partially observable Markov decision processes: Theory, models, and algorithms. Management Science 27:1-16, 1982.
37. [hereinafter Nau2003] Nau, D.; Au, T.C.; Ilghami, O.; Kuter. U.; Murdock, J. W.: Wu. D. and Yaman. F. Shop2: An HTN planning system. J. Artif. Intell. Res. (JAIR), 20:379-404, 2003.
38. [hereinafter Ortiz2002] Ortiz, C. L.; Grosz, B. J.; and Scales, N. Interpreting information requests in context: a collaborative web interface for distance learning. Autonomous Agents and Multi Agents Systems, 5(4):429--465.2002.
39. [hereinafter Oshrat2009] Oshrat, Y.; Lin, R. and Kraus, S. Facing the Challenge of Human-Agent Negotiations via Effective General Opponent Modeling. Proc of AAMAS 2009.
40. [hereinafter Pita2009] Pita, J.: Jain, M.; Ordonez, F.: Tambe, M.; Kraus, S. and Magori-Cohen. R. Effective Solutions for Real-World Stackelberg Games: When Agents Must Deal with Human Uncertainties, Proc of AAMAS 2009. [hereinafter Pynadath2002] D. V. Pynadath and M. Tambe. The communicative multiagent team decision problem: Analyzing teamwork theories and models. JAIR, 16:389-423, 2002.
41. [hereinafter Rich1996] Rich, C. and Sidner, C. L. Adding a collaborative agent to direct-manipulation interfaces. Technical Report 96-11, Mitsubishi Electric Research Laboratories. Cambridge, MA. May 1996.
42. [hereinafter Russel12010] Russell. S. J. and Norvig, P.; (2010). Artificial intelligence: a modern approach (Third Edition). Prentice Hall PEARSON.
43. [hereinafter Schmidt1978] Schmidt, C. F.; Sridharan N. S. and Goodson J. L. The plan recognition problem: An intersection of psychology and artificial intelligence. Artificial Intelligence, 1 1:45-83, 1978.
44. [hereinafter Short2009] Short, T.; Rosenfeld, A. and Kraus. S. Quickly Learning User Characteristics for Efficient Interruptability in Agent--User Collaborative Systems, MIMS09 workshop, AAMAS 2009.
45. [hereinafter Szer2005] Szer, D.; Charpillet, F. and Zilberstein S. MAA∗: A Heuristic Search Algorithm for Solving Decentralized POMDPs. In Proceedings of the Twenty-First Conference on Uncertainty in Artificial Intelligence (UAI), pages 576-583, 2005.
46. [hereinafter Talman2005] Talman. S.; Gal, Y.; Hadad. M.; and Kraus, S. Adapting to agents' personalities in negotiation in AAMAS-05, 2005.
47. [Tambe1997] Tambe, M. Toward flexible teamwork. Journal of AI Research 7:83-124. 1997.
48. [hereinafter Van2009] Van den Broeck, G.; Driessens, K. and Ramon. J. Monte-Carlo tree search in poker using expected reward distributions, in: Advances in Machine Learning, First Asian Conference on Machine Learning, ACML 2009, pp. 367-381.
49. [hereinafter Wooldridge2009] Wooldridge. M. An Introduction to Multiagent Systems. John Wiley & Sons, 2009.
50. [hereinafter Zuckerm2007] Zuckerman, I.; Kraus, S.; Rosenschein. J. S. and Kaminka G. A. Au adversarial environment model for bounded rational agents in zero-sum interactions. In AAMAS-07, 2007.
51. [hereinafter Zuckerm2011] Zuckerman. I.; and Hadad. M. Reasoning About Groups: A Cognitive Model for the Social Behavior Spectrum. Proceedings of IEEE/WIC/ACM International Conference on Intelligent Agent Technology. 2011.
52. [hereinafter Zuckerm2012] Zuckerman, I.; Kraus, S. and Rosenschein, J. S. The adversarial activity model for bounded rational agents. Autonomous Agents and Multi-Agent Systems 24(3):374-409, 2012.
53. [hereinafter Zhuo2012] Zhuo, H.; Yang. Q. and Kambhampati, S. "Action-model based multi-agent plan recognition." Advances in Neural Information Processing Systems. 2012.

Acknowledgement of the above references herein is not to be inferred as meaning that these are in any way relevant to the patentability of the presently disclosed subject matter.

### BACKGROUND OF THE DISCLOSURE

As computing becomes further distributed, dispersed systems arc becoming involved in a some level of interdependence in which the systems are concerned with some kind of persistent relationship, this relationship can be reflected as a social tie as in a social group of human. Different systems, for example, can cooperate for achieving common tasks; they may be engaged in activities together; they may share information and interests; they may compete or negotiate on common resources.

Thus, the interdependence between these systems forms an inter-systems, interaction wherein a group of individuals are connected to one other in structures of social networks, where the nodes in these networks may represent a member in a social group. Each group in the network may be heterogenic, that is, may include various types of members, named agents, consisting of systems from different organizations, as well as human beings, where each member interacts with another member, to satisfy either his own desires (e.g., interests), or common desires (e.g., interests).

The challenge in managing the interdependence between dispersed agents in a social group, exists in how inter-agent rules can be encoded, such that individual members in a group can effectively behave with each other in order to achieve their desires (e.g., interests) in complex and dynamic environments. In such environments, individual members often encounter differing, incomplete, and possibly inconsistent views of their environments, and can encounter unanticipated events. Furthermore, they can unexpectedly fail to fulfill desires or realize new opportunities.

Therefore, the environments in which individual members operate include exponential combinations of settings, inputs, and interconnection setups, and it is impossible to predict and preprogram in advance all the inter-agent rules and procedures that each individual needs to follow when being a part of a group. That is, this problem is computationally intractable. Likewise, these same conditions inhibit assignment of a central processor or a human being to manage the interaction.

Social based models for augmenting agents with social know-how are known, such as the Beliefs-Desire-Intention (BDI) based model (e.g., [Grosz 1996, Grosz 2004. Hadad 2005, Jennings 1995. Kinny1994, Levesque1990, Zuckerm2007]); models in which an agent adjusts its personality to its surrounding by changing its social tendency (e.g., [Castel1997, Castel1998, Hogg2001. Talman2005]); computational modeling of emotion (e.g.. [Gratch2004]) and more.

Theoretical social models have been applied in various types of multi-agent systems. Applications may control a group of agents to achieve joint tasks (e.g.. [Hadad2008, Hadad2011, Kaminka2002, Tambe1997]). Domain-specific algorithms and methods are known (e.g., [Glass2000, Ortiz2002, Rich1996]).

The disclosures of all publications and patent documents mentioned in the specification, and of the publications and patent documents cited therein directly or indirectly, are hereby incorporated by reference. Materiality of such publications and patent documents to patentability is not conceded.

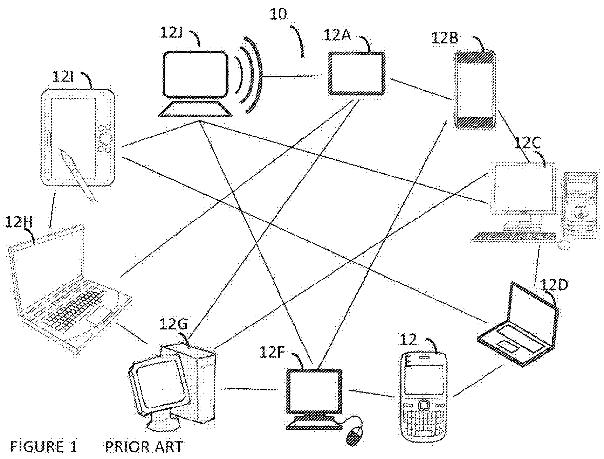

Fig. 1 illustrates a prior art network **10** with distributed systems in which each system in the network is referred to as a node **12A-12J** and can act as a client or server for the other computers in the network (without the need for a central server). All the systems in the network may use the same or a compatible program to connect to each other and to access files and other resources of another system in the network.

The illustrated network **10** is a peer-to-peer (P2P) which typically includes a distributed application architecture that partitions tasks or workloads among peers. Peers arc equally privileged participants in the application. The owner of each computer on a P2P network may set aside a portion of its resources - such as processing power, disk storage or network bandwidth - to be made directly available to other network participants, without the need for central coordination by servers or stable hosts. With this model, peers arc both suppliers and consumers of resources, in contrast to the traditional client-server model, where only servers supply (send), and clients consume (receive).

Another known network is a social network, which can be represented as a social structure made up of a set of actors (such as individuals or organizations) and the dyadic ties between these actors (such as relationships, connections, or interactions).

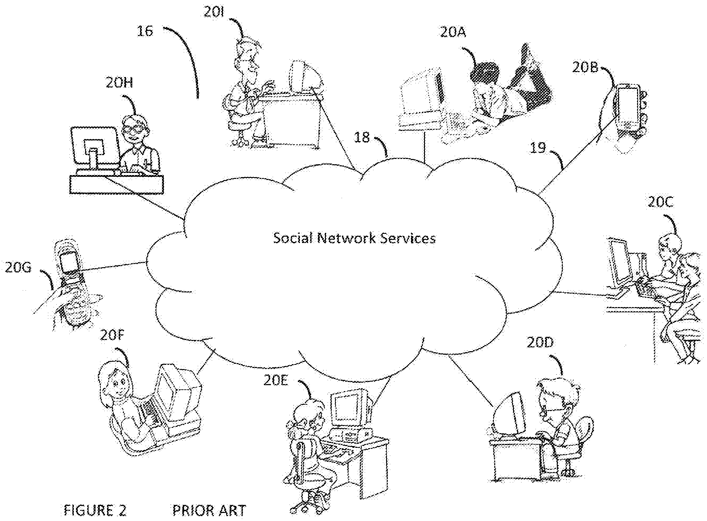

Fig. 2 schematically illustrates a prior art social networking service **16.** A social networking service is an online service, platform, or site **18** that focuses on facilitating the building of social networks or social relations among people **20A-201** who, for example, share interests, activities, backgrounds, or real-life connections. The social network service includes a representation of each user (often a profile), his/her social links, and a variety of additional services. Most social network services are web-based and provide communication means **19** allowing the users to interact over the Internet, such as via e-mail and instant messaging. Online community services are sometimes considered as a social network service, though in a broader sense, social network service usually means an individual-centered service, whereas online community services are group-centered. Social networking sites allow users to share ideas, activities, events, and interests within their individual networks.

The main types of existing social networking services arc those that contain category places (such as former school year or classmates), means to connect with friends (usually with self-description pages), and a recommendation system linked to trust.

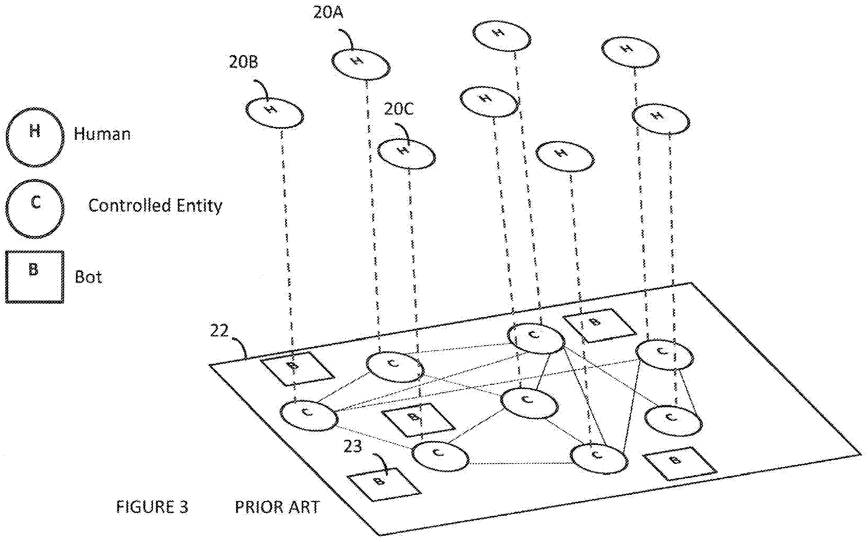

As shown in Figure 3 the social networking service **16** includes a virtual plane **22** having two types of agents, human controlled entity agents (**C**), and autonomic software agents (**B**) **23.** The human controlled agents allow a social interaction between the human **20A-20J** controlling human controlled entity agents thus the human controlled entity agents (**C**) are effected by humans that naturally have social abilities. In many conventional systems, software agents (bots) cannot contribute to a network without having social intelligence and social skills.

### SUMMARY OF CERTAIN EMBODIMENTS

By way of introduction the following is a description of the terms used herein in this application:
An agent (or actor) is anything that can be viewed as perceiving its environment through types of sensors, and acts upon such an environment through actuators. An agent may be activated (or operated) in a given environment (real or virtual).

Examples of agents: A human agent, where the sensors are eyes, ears, and other organs and actuators are: hands, legs, mouth, and other body parts. A robotic agent is one in which sensors may be cameras and infrared range finders and actuators are various motors. A software agent for sensory inputs may be received keystrokes, file contents, and network packets, and actuators may display on a screen, writing files, and sending network packets.

An agent (or actor) refers to both artificial and natural (biological) agents such as humans, as well as animals), and also to artificial agents such as: a robot; a machine; a software functionality: an application; a computerized system: a computerized entity; a non-player character (NPC): a computer generated forces (CGF); an unmanned vehicle (which includes: unmanned ground vehicle (UGV), such as the autonomous car; unmanned aerial vehicle (UAV), unmanned aircraft commonly known as a "drone"; unmanned combat air vehicle: unmanned surface vehicle (USV), for the operation on the surface of the water; autonomous underwater vehicle (AUV) or unmanned undersea vehicle (UUV), for the underwater operation: unmanned spacecraft, both remote controlled ("unmanned space mission") and autonomous ("robotic spacecraft" or "space probe").

A society of agents is a collection of agents interacting with each other. It is possible to categorize agent societies based on their degree of openness. In an open society there is no restriction for joining the society. In a closed society it is impossible for an "outside agent" to join the society. In "semi-open" and "semi-closed" societies, anybody may contribute an agent, but entry to the society is restricted, and behavior may be monitored by institutions.

Social groups can exist as personal and direct social ties. Social ties can be categorized, as belonging to personal social interactions, and the roles, values, and beliefs based on such interactions (commonly translated as "community"), or on the other hand as belonging to indirect interactions, impersonal roles, formal values, and beliefs based on such interactions (commonly translated as "society").

A social group is defined in terms of those who identify themselves as members of the social group. Regardless, social groups come in a myriad of sizes and varieties. For example, a society can be viewed as a large social group.

According to certain embodiments, the ASM component can be operative to perform social processes (or procedures) for an individual agent and thus to augment the social intelligence as well as the social skill of this agent and to enable it to either form and/or enter (join) a social group of agents and to construct an Artificial Social Network of agents.

A social intelligence provides to an individual agent the ability to manage interpersonal relationships in a social group of agents. A social skill facilitates its autonomous interaction and communication with other agents in its social groups.

As discussed in [Zuckerm2011], social interpersonal relationships can include:
An altruistic relationship - agent's activities whose outcome increases benefit of others in its group, but not its own benefit.

A cooperative relationship - agent's activities whose outcome increases both its own, and others' benefit.

An individualistic relationship - agent's activities whose outcome increases its own benefit.

A competitive relationship - agent's activities whose outcome increases its own benefit while it decreases an opponent's benefit.

An aggressive relationship - agent's activities whose outcome decreases opponent's benefit without increasing its own, for the sole purpose of inflicting injury.

Benefit can be computed through utility functions. A common usage of a utility function is by using a numeric value representing how 'good' the state is: the higher the utility, the better it is. Another possible usage is one where the utility function acts as a predicate over runs (see also [Wooldridge2009]).

According to certain embodiments, the ASM's social intelligence can typically include the ability of an agent to correctly capture social interpersonal relationships in a social group, and use these to navigate and achieve its set of desires.

According to certain embodiments, the social processes (or procedures) of the ASM component may enable the agent to attribute mental states to itself and other agent/s in its social groups and to understand that others have mental states that differ from its own.

Mental states can include beliefs, desires and intentions. Beliefs refer to what the agent knows e.g. an agent may, rightly or wrongly, believe that certain other agents are cooperative with itself in achieving a cooperative desire together.

Desire refers to what the agent ideally wants to see happening (desires may be expressed, for example, as goal, interest, preferences). Intention refers to what the agent actually acts towards. An agent may use mental states to explain and predict other agents' behavior, including being able to attribute mental states to others and understanding them as causes of behavior.

As defined in [Zuckerm2011] an agent Ai in a group can hold three types of desires with respect to the group's members (a) a cooperative desire; (b) an individual desire (c) a competitive desire;

A desire d, in the desires set, of an agent Ai is a cooperative with respect to a group member Aj, if Aj also has the desire d in its desires set.

A desire d, in the desires set, of an agent Ai is a individual with respect to a group member Aj, if Aj does not have either the desire d or the contrary of d in its desires set.

A desire d, in the desires set, of an agent Ai is a competitive with respect to a group member Aj, if Aj also has the contrary of d in its desires set.

For example, in a cyber environment, one agent may have a desire "protect the computer of X" and another agent may have the desire "attack the computer X". Thus, they have competitive desires. All the agents with the desire "protect the computer X" have a cooperative desire. An individual desire may appear when only one agent has the desire "protect the computer X" and none of the other agent has the desire "attack the computer X".

According to certain embodiments, the ASM component may enable the agent, through the social process (or procedures), to represent, in its own ASM. the mental representations of other agents as so-called meta-representations. The agent may then be able to infer other agents' beliefs, desires, intentions, and so on, and use this information to interpret the other agents' behaviors and/or predict what the other agents may do next.

According to certain embodiments, the association of the agent to an ASM component can be effected through an Artificial Social Services platform. The ASM component provides to the agents an ability to be a member of an Artificial Social Network by a registration process, provided by the Artificial Social Services platform. The agent may use its ASM component to form new social groups in the Artificial Social Network, or to enter into existing social groups.

Applications include, but arc not limited to, gaming and entertainment applications, cloud computing, cyber security, satellites, unmanned vehicles & robotics, network & communication utilities. For example, in gaming applications the ASM component enables a non-player character (NPC) to autonomously socialize with other NPCs and or with human controlled characters playing the game to enable social interaction between NPCs in games with each other and with human players. Thus, the ASM, according to certain embodiments, enables spontaneous social behavior in gaming applications. In cloud computing, the ASM may be incorporated into complex clusters and unite in the cloud, enabling the computers to "interact" with each other with no need for an overseeing manager. In cyber security, the ASM may enable a "social protection network" - if one computer on a network is attacked, the other computers can identify this, protect sensitive information, and thwart the attack.

Network refers to any telecommunications network including computer network, data network which allows computers or modules within a computer to exchange data.

There is provided in accordance with an aspect of the invention a method for creating a subnetwork within a computerized network, the method comprising: forming a virtual entity (hereinafter ASM) representative of an agent linked to the network, the ASM including first data relating to an environment state of the agent, second data relating to at least one desire of the agent, and third data relating to at least one capability of the agent; and providing the ASM with an ability to link to at least a second ASM to form a subnetwork with the at least one ASM in accordance with the first second and third data.

The method can additionally comprise linking the ASM with at least a second ASM to form a first subnetwork.

At least one of the first, second or third data changes and the ASM links with at least one third virtual entity to form a second subnetwork.

The method can further include providing the ASM with an ability to interact with the agent associated therewith.

The step of forming said ASM further comprises receiving from the agent a new registration request, including the first second and third data related to the agent and creating an interface with the Agent.

The step of providing the ASM with an ability to link can include a social interaction and reasoning process.

The social interaction and reasoning process can include updating beliefs of the agent, establishing at least one desire of the agent. The beliefs can include dynamic beliefs and static beliefs. The dynamic beliefs can include dynamic social beliefs and dynamic environmental beliefs related to environment states of the agent.

The dynamic beliefs can include individual beliefs referring to input regarding the agent and mutual beliefs referring to input regarding at least one agent associated with the at least one second ASM.

Establishing at least one desire can include reasoning, in accordance with the beliefs, about a preferable desire and at least one second ASM associated with a second agent capable of facilitating the ASM achieving said desire.

The social interaction and reasoning process further can include an act phase during which intentions of the agent for achieving the preferable desire are determined.

The act phase further can include forming messages for the at least one second ASM.

The social interaction and reasoning process can further include an execution phase during which output data is sent to the agent and to the at least one second ASM. The output data can include at least one primitive action to be executed by the agent.

Establishing at least one desire can further include computing the utility of each desire in a desires list of the agent. Establishing at least one desire can further include reasoning about the best way to achieve the desire and determining whether or not the desire is to be achieved with at least one second ASM associated with a second agent capable of facilitating the ASM achieving said desire Establishing at least one desire can further include detecting desire of the at least one second agent associated with the at least one second ASM. Establishing at least one desire can further include updating the beliefs regarding the possibility to achieve the desire. The social interaction and reasoning process further can include an act phase during which intentions of the agent for achieving the preferable desire are determined. The messages can include identification of the ASM identification: identification of the second ASM: and indication regarding the desire.

There is provided in accordance with another aspect of the presently disclosed subject matter a system for creating a subnetwork within a computerized network. The system comprising: a processor: a plurality of modules including instructions for execution by the processor, the modules comprising: a first module for forming a virtual entity (hereinafter ASM) representative of an agent linked to the network, the virtual entity including first data relating to an environment state of the agent, second data relating to at least one desire of the agent, and third data relating to at least one capability of the agent; and a second module for providing the ASM with an ability to link to other ASMs to form subnetworks with the at least one entity in accordance with the first second and third data.

The system can further include a database and a module for establishing communication between the ASM and at least a second ASM. The first module further comprises an interaction interface for interaction with the agent and the second module comprises a social interaction and reasoning process for interaction with the second ASM. The second module can be configured to operate in an automatic mode, in which the reasoning process is carried out by the second module, and a controlled mode, in which at least some of, or the entire reasoning process is carried out externally to said ASM.

The interaction interface can be configured to convert communication with the agent between a data-structure communication and a communication language of the agent.

The system can further include social services module including a common communication media. The social services module can be configured to store, retrieve and update dynamic data related to a changing environment of the agent and the at least second agent. The social services module can further include data services module configured to store. retrieve and update static beliefs related to an environment of the agent which allows the ASM to determine ways to achieve the at least one desire.

The data services can further include data relating to at least one capability of the agent. The data services can further include at least one of the following data: description of domain actions including data relating to primitive and non-primitive action: data related to environment of the state; a library of recipes to achieve non-primitive actions: data regarding desires. The system can further include agent services module configured for interaction with the agent and for retrieving and updating dynamic data about the agent. The agent services module can be configured for sending command messages to the agent.

Computational components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences such as but not limited to objects, procedures, functions, routines and programs and may originate from several computer files which typically operate synergistically.

Data can be stored on one or more tangible or intangible computer readable media stored at one or more different locations, different network nudes or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line; which is of any type or level or amount or category of volatility, differentiation, mutability, accessibility, addressability, capacity, performance and energy use; and which is based on any suitable technologies such as semiconductor, magnetic, optical, paper and others.

There is provided in accordance with yet another example of the presently disclosed subject matter a computerized method for forming interrelationships between a plurality of agents on at least one computerized device. The method includes forming a plurality of ASMs each representative of one of the agents, each of the ASMs include first data relating to an environment state of the agent, second data relating to at least one desire of the agent, and third data relating to at least one capability of the agent: and providing each of the ASMs with an ability to select at least one other ASM representative of a second agent so as to form interrelationships therewith, the selection is carried out in accordance with the first second and third data.

### BRIEF DESCRIPTION OF THE DRAWINGS

Figures are given as examples only and in no way limit the scope of the invention. Like components are denoted by like reference numerals.
**Figure 1** is an example of a prior art distributed application architecture;
**Figure 2** is a in an example of a prior art social network;
**Figure 3** is a schematic diagram of the social network of Figure 2;
**Figure 4** is a schematic illustration of an Artificial Social Network according to embodiments of the present invention;
**Figure 5** is a schematic diagram of the Artificial Social of Figure 4;
**Figure 6** is a schematic illustration of an Artificial Social Network according to another embodiment of the present invention;
**Figure 7** is a schematic illustration of a server providing Artificial Social services according to an embodiment of the present invention;
**Figure 8** is a flow chart illustrating a registering process of associating an ASM with a new agent according to embodiments of the present invention.
**Figure 9** is a flow chart illustrating a social interaction and reasoning process carried out by the Artificial Social mind according to an embodiment of the present invention;
**Figure 10** is a flow chart illustrating a method for establishing a desire according to an embodiments of the present invention: and
**Figure 11** is a flow chart illustrating a method of an ACT Phase according to an embodiment of the present invention.

### DETAILED DESCRIPTION OF CERTAIN EMBODIMENTS

According to embodiments of the present invention. Artificial Social Services can include on-line services, platforms, or sites that focus on the facilities of the construction of Artificial Social Networks among different types of agents by providing them with Artificial Social Minds (ASMs).

According to embodiments of the present invention, Artificial Social Services can include services to access the repository of Artificial Social Minds (ASMs) and services for creating (or removing) ASMs at (or from) the repository.

According to embodiments of the present invention, any type of agent can register to the network and be associated with an Artificial Social Mind (ASM) that can provide an agent with an ability to decide upon and initiate becoming a member in an Artificial Social Network.

According to embodiments of the present invention, the Artificial Social Network can be made up from dynamic ties between the Artificial Social Minds (ASMs) (such as relationship, connections, or interactions).

According to embodiments of the present invention, the ASM can enable an agent that lacks social abilities to socialize with others.

According to embodiments of the present invention, the ASM can augment the social capabilities of agents that already have these abilities.

According to embodiments of the present invention, an agent can be a member in several Artificial Social Networks.

It is indeed reasonable to assume that an agent associates itself to different types of Artificial Social Minds (ASMs) and acts in different social groups.

According to embodiments of the present invention, an Artificial Social Mind (ASM) can be a component (e.g., software application, software program) that is operative to perform social processes (or procedures).

According to embodiments of the present invention, the social processes (or procedures) can augment the social intelligence as well as the social skills of an agent.

According to embodiments of the present invention, the ASM can be operated in two different modes: a) an automatic mode; or b) a controlled mode.

According to embodiments of the present invention, in the case of automatic mode of the ASM the social interaction and reasoning processes of the agent can be done by the ASM. In the controlled mode, some of the social interaction and reasoning processes can be done by the agent and the ASM can be responsible to convert interaction between the agent and the ASMs. That is, the ASM can convert messages sent by other ASMs to its agent language and vice versa.

According to embodiments of the present invention, the ASM can include an agent interaction interface which is responsible to convert the language of the ASM to the agent language and vice versa based on data base of rules.

According to embodiments of the present invention, the agent interaction interface can include implementation of plan recognition [Schmidt1978] as well as goal (or activity) recognition methods that can observe its agent actions in order to infer its plans and goals. Example of these methods can be found at [Amir2014. Banerjee2014, Banerjee2011, Banerjee2010, Lan2012, Marhasev2009, Zhuo2012].

According to embodiments of the present invention, the agent interaction interface can include implementation of learning methods to learn its agent (e.g.. [Short2009]).

According to embodiments of the present invention, the implementation of a social interaction and reasoning processes can incorporate social based models of agent behavior such as a BDI model, e.g.,[Grosz1996, Grosz2004, Hadad2005, Jennings1995, Kinny1994. Levesque1990, Zuckerm2007]); models in which an agent adjusts its personality to its surroundings by changing its social tendency (e.g., [Castel1997, Castel1998, Hogg2001, Talman2005]): computational modeling of emotion (e.g., [Gratch2004]) and more. It is appreciated that the reference to methods and models such as BDI is not intended to be limiting. Alternatively, only some features of any of the above models or other models can be employed, and can be combined with suitable features from other models, if desired.

According to embodiments of the present invention, social intelligence can provide to an agent the ability to manage interpersonal relationships with others in its surroundings. Social skills can facilitate its interaction and communication with others.

According to embodiments of the present invention, an Artificial Social Mind (ASM) can assist the agent to manage its relationship with other agents in the Artificial Social Network.

According to embodiments of the present invention, the Artificial Social Network can represent mixed groups (or mixed societies) of both natural (biological) agents (e.g.. human) and artificial agents (e.g., robot, processor, machine, and software). Hence, it can be an extension of a social network with human. In order to be a member of the Artificial Social Network, the agent can register to the network (via the Artificial Social Services) and be associated with one (or more) Artificial Social Mind(s) (ASM) in the network.

According to embodiments of the present invention, the ASM can provide the agent an ability to attribute mental states to itself and to other agents in its Artificial Social Networks, and to understand that others have mental states that are different from its own.

Certain systems seek to implement a social based model for the computerized agents in order to socialize their behavior. Implementing such a model as a part of an individual agent enhances its social capabilities and enables it to autonomously reason about necessary interaction with others without a central processor (or a human being) for managing the interaction.

Certain embodiments seek to utilize social based models to implement an isolated and/or independent computerized component, termed herein an Artificial Social Mind (ASM), which can be associated to an individual agent and to provide the ASM with socialization characteristics to enable the agent to either form and/or enter (join) a social group of agents and to construct an Artificial Social Network of agents.

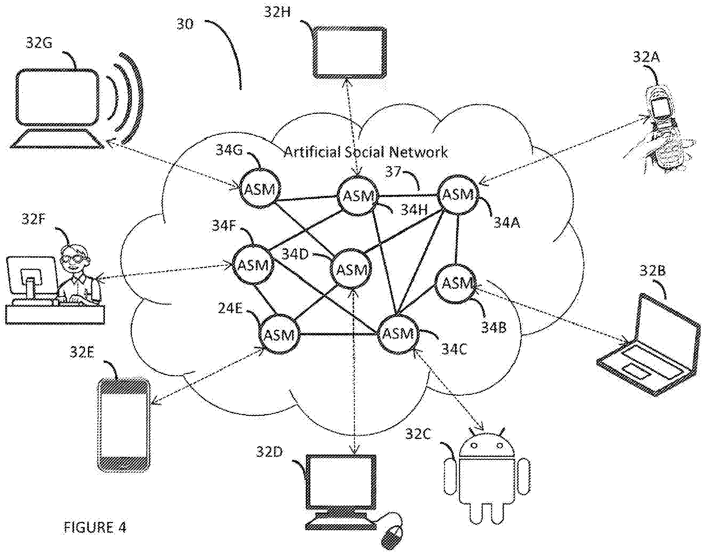

Turning now to the drawings, Figure 4 schematically illustrates an artificial social network service **30** for various types of agents, such as but not limited to human **32A**, **32F**, robot **32C**, and different types of software components **32B**, **32D**, **32E**, **32G**, **32H**. Each agent is associated with an Artificial Social Mind (herein after ASM) **34A-34H.** The ASM is virtual entity representative of the agent and includes the capability to perform social interaction such that the social relationships, as well as the communication and the interaction between the agents **32A-32H**, can be conducted via their ASMs.

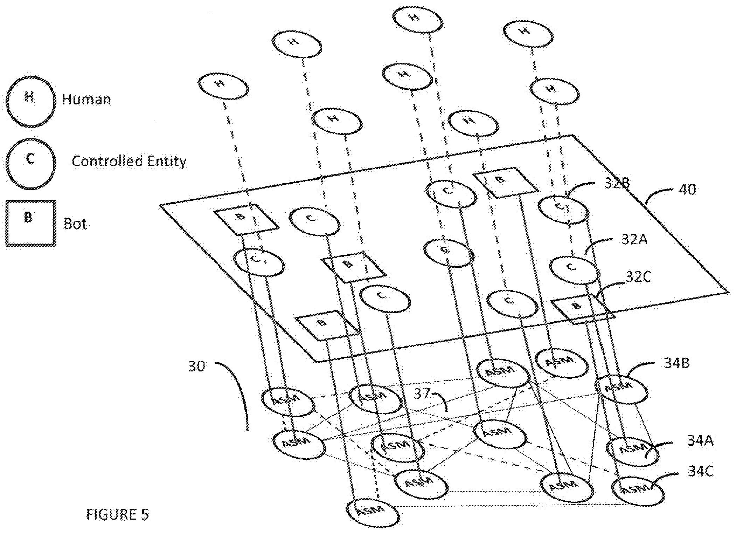

Attention is now made to Fig. 5, the network **30** forms an agent plane **40** which can include computers controlled by humans (**C**) as well as Bots (**B**), i.e. virtual agents which are not directly controlled by a human. Associating an ASM to each agent, allows all the agents including the bots to form social interaction.

It is appreciated that although the human controlled agents allow a social interaction with one another however in order to allow interaction between the human controlled agents and the bots a mediator can be provided for converting the information to human language, and *vice versa*. Thus, each human controlled agents is associated with an ASM including functionality for social interaction between the human and the bots. This results in a mixed social network of both humans and bots. The ASMs **34A-34G** form dyadic ties **37** with one another, such as but not limited to relationships, connections, or interactions. The dyadic ties between the ASMs form an Artificial Social Network according to embodiments of the present invention.

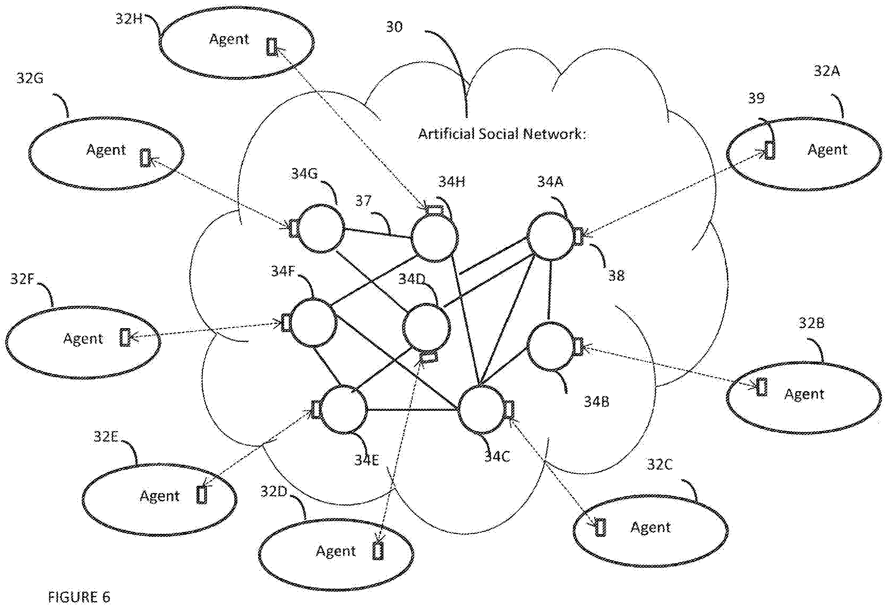

As shown in Figure 6 the ASM and the agent in the Artificial Social Network **30** can further include an interface module **38** and **39** for interaction between the agent and the associated ASMs thereof.

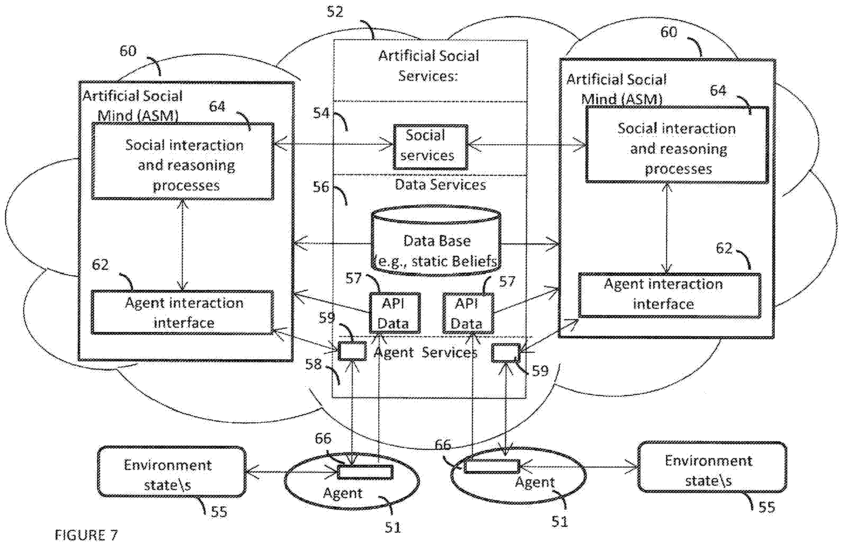

Figure 7 schematically illustrates a server having at least one Artificial Social Mind (ASM) **60** connected to Artificial Social services **52** according to an embodiment of the present invention. The Artificial Social Mind (ASM) **60** includes a component (e.g., module software application, software program) operative to perform social processes or procedures. The ASM **60** is created or removed by the Artificial Social Services **52** and is associated to an agent **51.** The Artificial Social Services **52** are also responsible on other services of the Artificial Social Network like: Data Base server, communication services, and so on as explained hereinafter.

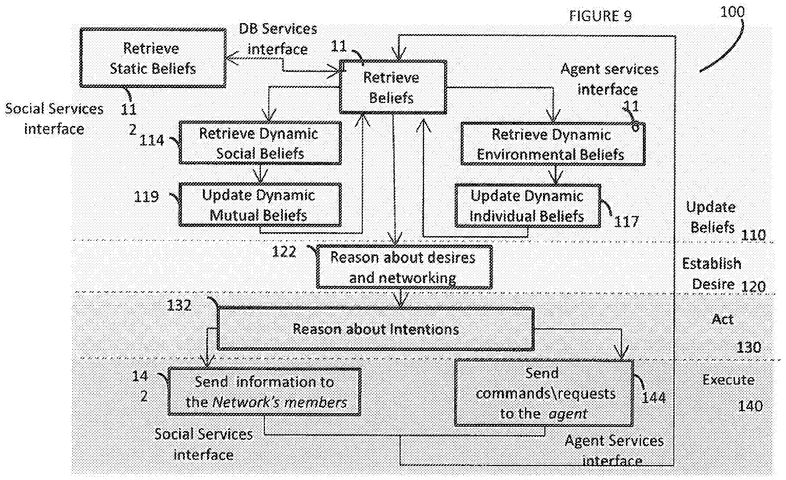

Embodiments of the Social Reasoning Process performed by the ASM are described herein below with reference to Figs. 9 through 11.

According to an example the ASM includes an agent interaction interface **62** and a social interaction and reasoning process (hereinafter SIRP) **64.** The interaction of the ASM **60** and the agent **51** associated therewith is carried out through the agent interaction interface **62** while the interaction between the various ASMs in the network is carried out by the SIRP **64** of the ASM.

The agent interaction interface **62** is a component (e.g., software application, software program), which is responsible to be an interpreter between the agent **51** and its ASM 60. The transmission of the information between the agent and its ASM can be carried out by a standard protocol (e.g. TCP/IP) and a suitably defined Application Programming Interface (hereinafter API) that specifies how the agent and the ASM components are to interact with each other. The API can include information about the agent's communication language and protocol. The API can include an API data module **57** which includes data about converting the data received from the agent to the language of the server and *vice versa*, such that the agent and its ASM can communicate via a common language. The API can further include a communication module **59** configured to allow communication between the agent **51** and the agent interaction interface **62.** The communication module **59** can be, for example, a blackboard on which the agents or the ASM thereof post messages. Finally, the API can include an interface module **66** installed on the agent device, such will allow him to communicate with the server.

The agent interaction interface **62** can be configured to (a) convert the communication between the agent and its ASM into a standard data-structure; and (b) convert the communication between the ASM to its agent from a data-structure to the agent's communication language.

For example, the ASM **60** can send to the agent a request to execute an action in its environment ('execution' message) and the agent can reply to the ASM about the status of the action it was requested to execute (e.g., 'failed', 'completed', 'in process'). The ASM can also send to the agent a request for information about its environment **55** (e.g.. 'query' message). The agent can reply to the ASM's queries and can send more information that can be relevant to the ASM (e.g., 'event' message). In addition the agent can send requests such as to register or to unregister the ASM associated therewith from a social group.

The following can be provided by the API data: a set of pre-defined answers about the status of the action's execution, a predefined set of queries (from ASM to Agent), a predefined set of 'events' (from agent to its ASM) and a predefined set of requests from an agent to its ASM.

The SIRP **64** is configured to allow the agents **51** to interact with each other through their respective ASMs **60**. The transmission of the information between various ASMs can be carried out by a standard protocol (e.g.. TCP/IP). The SIRP **64** can define a standard communication language (or standard protocol or similar) to enable communication between the ASMs in the network.

The messages transmitted between the ASMs **60** can include some or all of the following information elements: (a) Sender identification; (b) Destination (the receiver agents' identification); (c) Message Type - Acting as a group can involve any or all of several group process including: processes for performing activities and allocating tasks, processes for coordination, conflict- avoidance and helpful behavior. The message type indicates to the recipient agent to associate the message to the specific process. (d) Action - indicates the desire and the action that the message is related to. (e) A body with the message's information. (f) Collected answers: indicates the answers of the recipients agent if a group decision is deemed necessary.

The ASMs communication languages can include any or all of: a unique identification for agents, a well defined set of message types (e.g., agreement, allocate task, synchronize start, synchronize finish, help, pool idea, select recipe), a set of parameters and a set of actions and/or desires that the agents recognize.

Transmitting messages between the agents to their ASM and between the ASMs to each other is carried out by a social services **54** provided in the artificial social services **52.** The social services **54** can include a common communication media, and\or tools and\or applications (e.g.. blackboard, shared memory, communication channels, Internet, etc.).

The types of the messages transmitted through the social services **54** can include information messages, request messages, command messages, replying messages, etc. The fields of each type of message and its structure can be in accordance with a well defined data structure (e.g., 8-byte for sender address information, 8-byte for receiver address information. 16-byte for message header and so on). The decision regarding message to be sent and regarding the content of the message can be made either by the SIRP **64** of the ASM **60**, or by the agent **51** itself.

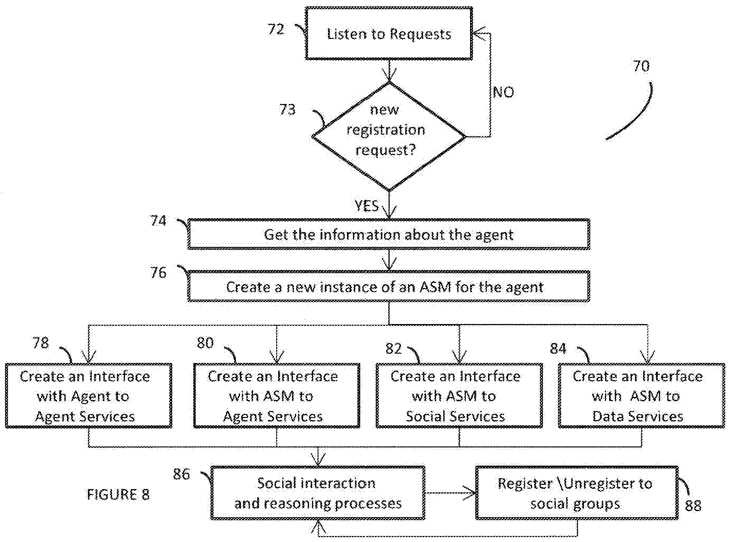

Creating an ASM **60** associated with an agent is carried out by a registration process. Figure 8 schematically illustrates an example method for registering to the Artificial Social Network, according to embodiments of the present invention. Joining an Artificial Social Network can include registration and activation phases. The agent **51** can register to the Artificial Social Network through the Artificial Social Services **52** by entering its profile. including its identification details, it capabilities like expertise and so on. The Artificial Social Services **52** create a respective ASM **60** to the agent and associate between the agent to the ASM **60.**

Forming the ASM **60** includes providing first data relating to an environment state **55** of the agent **51**, second data relating to at least one desire of the agent **51**, and third data relating to at least one capability of the agent **51.** In addition, the Artificial Social Services **52** provides the ASM **60** with an ability to link to at least a second ASM to form a subnetwork therewith in accordance with the first second and third data, i.e., environment state of the agent **51**, as well as desires and capabilities thereof.

Having an ASM enables the agent to be a part of the Artificial Social Network and to join different types of social groups (which can be referred to as a subnetworks) in the network according to its one or more desires. The second phase is the activation phase. This phase is a loop in which the agent **51** monitors ASM **60** thereof and the ASM **60** monitors the agent **51** to which it is associated. In the second phase, the ASM of the agent can reason about the desires of the agent to join an existing social group (subnetwork) in the network and to socialize with the members of this group by interacting with them.

It is appreciated that the Artificial Social Services **52** are components (e.g., software applications, software programs) that are operative to perform several processes or procedures to enable services (e.g., Data Base servers and communication services) to the Artificial Social Network formed by the ASMs **60.** The Artificial Social Services **52** can include some or all of the following types of services: Social Services **54**: Data Services **56:** and Agent Services **58.**

The Social Services **54** are responsible to store, retrieve and update the dynamic social beliefs, i.e., dynamic data related to the changing environment **55** of each agent in the artificial social network. The dynamic social beliefs can include the status of membership in the social group, mental states, communication messages and so on.

Agent Services **58** can include, for example, a communication module **59** for the interaction of the ASM **60** with its agent **51**. The communication module can receive\send information about the environment state of the agent; send/receive requests/commands from the ASM to the agent and *vice versa,* etc.

The Data Services **56** are responsible to store, retrieve and update static Beliefs. The beliefs can include a set of rules relates to the environment of the agent **51** which allows the ASM **60** to determine ways to achieve the desire of the agent. For example, in a case of a game, the beliefs can include a set of rules relating to the game. It is appreciated that beliefs, e.g.. static beliefs, can be maintained in databases which an ASM can access via suitable database services. In addition, the date services **56** include data relating directly to the agent, such as capabilities. desires etc. The data Services **56** can further include:
Description of domain actions including: primitive (basic) actions: and non-primitive (complex) actions (which also can be expressed as task, behavior):
   Representation of environment (or world) states:
   A library of recipes (or methods) to achieve the non-primitive complex actions;
Knowledge about each agent (e.g., agent's profile):
   Knowledge about groups (e.g., types of groups):
   Knowledge about desires.
Knowledge about Messages:
   A domain action typically has various properties associated with it, such as action type, agent, time of performance, and other objects involved in performing the action. A domain action can be either a primitive (basic action) or a non-primitive (complex action). Domain actions as well as examples of domain action data structures can be found at [Hadad2014, Hadad 1999].

A representation of environment (or world) states refers to a database that represents information of the agent about its environment in a symbolic way. The representation can include predefined queries, propositional logic, propositional formulas, and so on, e.g., as found at: [Ghallab2004, Russell2010, Wooldridge2009]). A representation of environment (or world) states is used to manipulate the agent's environment into well defined symbolic information, so queries from the ASM to the agent are effected according to this representation.

A recipe (or a method) specifies a way to perform a non-primitive (complex) domain action. A definition of a recipe and examples of recipe data structures, e.g., as described at [Hadad2014, Hadad 1999). A recipe library typically comprises a repository (e.g.. database) of recipes.

Knowledge about an agent can include information about basic properties of the agent (e.g. some or all of the agent's type, size, capabilities, language and so on.) An agent type can be for example: "human", "robot". "NPC" and so on. The capabilities can be for example, basic actions that the agent able to execute as: "jump", "move to", "sleep", "save data" and so on. A knowledge about the agent language can include for example a dictionary of messages to support translation of the ASM messages to the agent messages and vice versa. Knowledge about an agent also can include information about the agent's preferences and/or expertise.

Knowledge about groups can include information on possible group types. Each group type can have a unique identification and is associated with several properties such as the minimum and maximum possible members, the type of agent that can join and be a member in that group, and so on.

Knowledge about desires can include information about desires of various types of groups in the domain. A desire can capture: knowledge about favorable states of the agent in its environment; A utility by achieving that desire; A name of the desire; A set of non-primitive (complex) actions to achieve the desire;

The Social Services **54** can further include Dynamic Social Beliefs which can frequently be modified during the lifetime of the Artificial Social Network. The ASM can also accesses\update these beliefs via the social services.

Dynamic Social Beliefs can include some or all of:
a. Information about concrete groups (subnetworks) in the network. e.g. including concrete members in the groups (subnetworks);
b. Concrete desires of the groups (subnetworks) in the network as well as information about intentions, states of the agent in achieving these desires represented e.g., by a recipe tree - e.g., as shown in an example of a recipe tree at [Hadad2014]);
c. Communication messages transferred between ASMs in the network. Figure 8 illustrates a method **70** for adding a new member to the Artificial Social Network in accordance with an example of the invention. Any type of agent may typically register to the network. The artificial social services await receiving new requests from agent **(Block 72)**. When the artificial social services receive a new registration request **(Block 73)**, the artificial social services ask for basic information about the agent **(Block 74)**, including some or all of the agent's basic properties, e.g., its capabilities, its desires, environment states and so on. It also can include information about the agent's type, preferences, expertise and so on. The information can be supplied through a suitable application form. If the information is valid, a new ASM is created **(Block 76)**. The creation of the ASM instance also includes creation of an interface with Agent to agent services **(Block 78)**, an interface with the agent services to the ASM **(Block 80)** and an interlace with ASM to the Social Services **(Block 82)** and to the Data Services **(Block 84)**. These interfaces associate the agent to its ASM and to the other services, so as to enable the agent to perform social interaction and reasoning processes (SIRP) **(Block 86)**. In addition, at any stage social reasoning of the ASM can yield a decision to register\unregister to social groups **(Block 88).**

Reference is now made to Fig. 9. according to an example a social interaction and reasoning process (hereinafter SIRP) **100** can be implemented by the ASM as a think-act loop, and can include an update beliefs phase **110**. a desire establishing phase **120**, an act phase **130,** and an execution phase **140 .** The update beliefs phase **110** is responsible to receive all relevant input (typically, dynamic beliefs as well as static beliefs). The desire establishing phase **120** is responsible to reason about the preferable desire and the social group to achieve that desire with its group members. The act phase **130** is responsible to determine intentions for achieving the preferable desire: and the execution phase **140** is responsible to send all the relevant output. The above phases are operated in a loop during the lifetime of the ASM.

In the update beliefs phase **110,** the ASM retrieves static beliefs **(Block 112)**; dynamic social beliefs **(Block 114)**, and retrieves dynamic environmental beliefs **(Block 116)** about environment states of the agent.

The ASM manages the information in its data structures, where individual beliefs **(Block 117)** refer to input about itself and mutual beliefs **(Block 119)** refer to the input of social services about other agents in the Artificial Social Network (i.e., dynamic social beliefs).

During the desire establishing phase **120** the ASM reasons about desires and networking **(Block 122)** by utilizing the above input of update beliefs phase to decide about the best desire.

In the act phase **130**, once a desire. e.g. best desire, is selected, the ASM reasons about the sequence of the actions that achieves the desire. During the act phase **130** the ASM can adopts intentions **(Block 132)** for the agent with which it is associated. The process for adopting intentions can be based on known methods such as [Grosz1996. Tambe1997. Grosz1999, Hadad1999]. Adopting intentions for a competitive desire are also known and can be based, for example, on [Zuckerm2012, Hoang2005].

The ASMs that involved in achieving a specific desire can use similar reasoning methods for achieving the desire. The reasoning methods of the ASM can also be based on decision-making methods for example [Hastings1970, Van2009. Szer2005, Monahan1982. Pita2009, Pynadath2002] and negotiation methods such as [Chalamish2011,Gal2010, Katz2008, Kraus2000, Lin2008, Lin2010. Lin 2011, Oshrat2009].

During the act phase 130 the agents can create messages in order to interact with others. These messages are sent by the ASMs of the agent in the execution phase **140 (Block 142).** In addition, the Act phase 130 of the ASM can reason about set of primitive (basic) actions that should be executed by the agent in its environment (to achieve its desire), thus the ASM sends to the agent a request to execute these primitive actions in the execute phase **(Block 144).**

According to the embodies of this invention the Desire Establishing phase **120** of the ASM takes also into consideration the desires of other members in the Artificial Social Network. based on others' desires and its utility from achieving its desires with the others, the ASM establishes a social group.

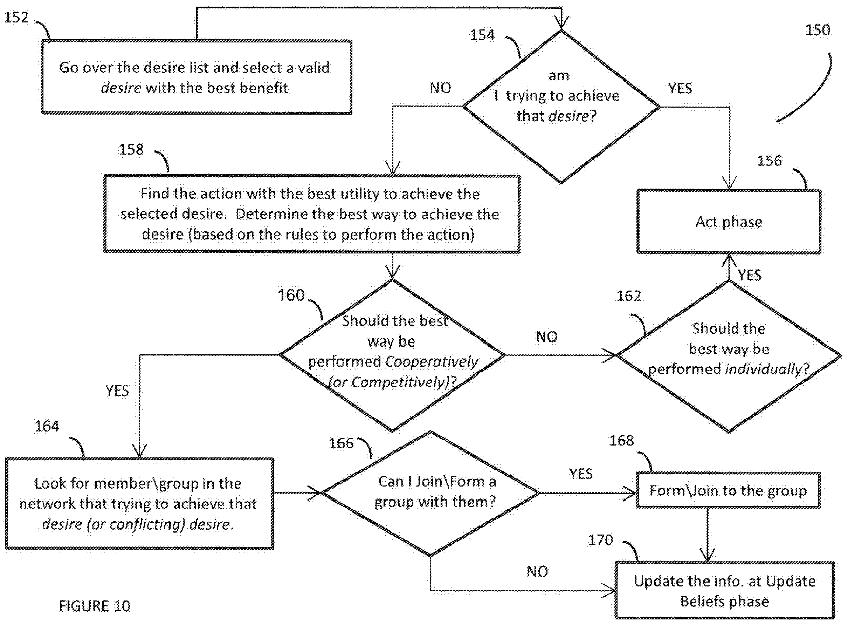

An example of reasoning about desires and networking method indicated in reference to Fig. 9 **(Block 122)** is illustrated in the flow chart **150** of Figure 10. First, the ASM of the agent can select its best desire (Block **152**) e.g. by computing the utility of each desire in its agent's desires list. The result of the computation depends on its knowledge about the agent's environment states (represented as dynamic beliefs). Thus, the result can be changed during the lifetime of the agent. A valid desire is a desire that can be achieved in its agent's environment according to the ASM's beliefs. If the agent does try to achieve the selected desire **(Block 154)** the ASM acts to perform the action that achieves the desire (the Act phase **Block 130** in its think-act loop) **(Block 156)**. If the agent does not try to achieve its best desire, the ASM determines the best way to achieve the desire **(Block 158)** based on the knowledge about the desire. The ASM can find, for example, a set of possible ways to perform the non-primitive actions that enable it to achieve the desire and to select the best way.

The way to perform the action can be given in the Data Base as a recipe (or a set of rules) including the type and number of agents necessary to perform the action. Thus, if according to the rules, the ASM reasons that the best way to perform the desire should be done cooperatively (or competitively) **(Block 160)**, the ASM looks for members in the artificial social network that try to achieve corresponding desires **(Block 164).** Otherwise, the ASM determines whether or not the best way to achieve the desire is to be carried out individually **(Block 162).**

The knowledge about others' desires can be known to the ASM. for example, from the announcement the desires in the network. That is, when the ASM looking for collaborators it may announce in the network about its desires and the types of members it looking for, or looks for members that already announced a similar desire. In the competitive case, the ASM can follow, for example, after members that announced a corresponding desire. Another way to detect desires of others is by using methods for plan recognition and goal (or activity) recognition. If appropriated members are not found **(Block 166)** the ASM updates its beliefs about the possibility to achieve the desire **(Block 170)** (the Update Beliefs phase in its think-act loop). Otherwise, the ASM forms (or joint to) group **(Block 168)**, its desire becomes cooperative (or competitive) desire and it should update the dynamic social beliefs regarding the group.

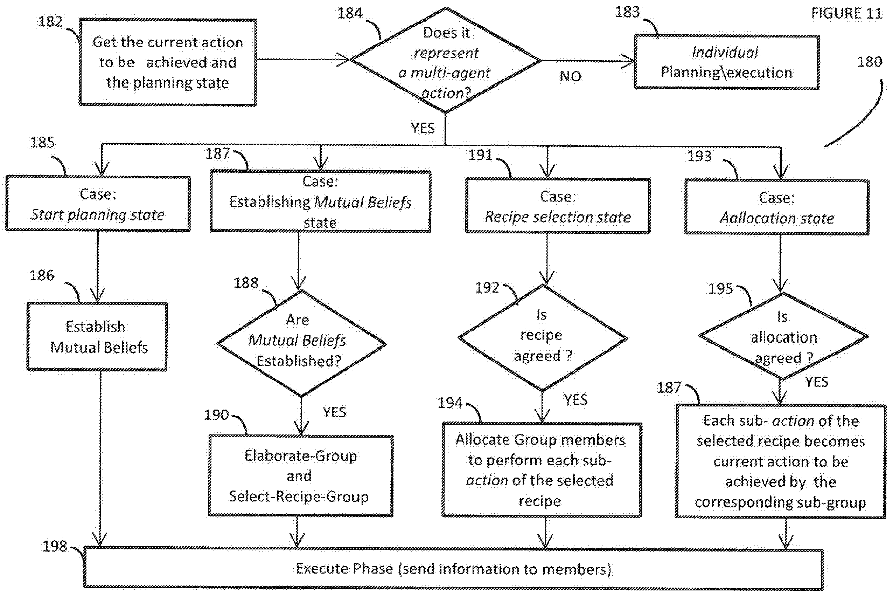

An example of method for implementing the Act phase is illustrated in Figure 11. The method **180** is based on individual planning and collaborative planning are described e.g. at [Gmsz1999, Hadad1999, Hadad2014].

The ASM may find a way to achieve the best desire of its agent by finding a way to perform a non-primitive complex action (also known as a task or behavior) with the highest benefit. The way to perform a complex action can be given in the Data Base as a recipe (or a method). Thus, at any stage in the think-act loop the ASM of the agent intends to perform an action that achieves its best desire or a sub-action of some recipe. The ASM gets the action it intends to perform **(Block 184).** The ASM first determines if the action is a multi-agent action or not **(Block 184).** If the action can be achieved by the agent alone, then the agent plans and executes the action by individual planning **(Block 183)** (e.g. HTN planning [Nau2003]). If such action is however to be achieved by more than one agent, the social group that tries to achieve this desire employs collaborative group planning. In the illustrated example the group planning is based on the Shared Plan model.

Thus, in a case of multi-agent action an appointed ASM should establish Mutual Beliefs **(Block 186)** from ASMs of other agents which can be involved in the multi-agent action. That is. if the ASM is an appointed of this action the ASM creates a request message (of AGREEMENT type) to other ASMs and asks their agreement to be involved in this action. The other ASMs of other agents create a replying message (of AGREEMENT type) and can agree or disagree and to answer the appointed ASM accordingly. If the other ASMs agreed, i.e. mutual beliefs are established **(Block 188),** the appointed ASM creates a command message (of SYNCHRONIZE START type) to the other ASMs about the starting the performance of this action. Then, the appointed ASM plans this action by selecting an appropriated recipe (i.e., a possible way to perform the action) **(Block 190).** In this ease, the appointed ASM creates a request message (of POOL IDEA) to other ASM and asks them to send ideas for a recipe for the specific action. The other ASMs create a replying message (of POOL IDEA type) with ideas for recipe. Now, the appointed ASM sends to the other ASMs an information message with the selected recipe (of SELECT RECIPE type). Also here, the other ASMs of other agents create a replying message (of AGREEMENT type) and can agree or disagree **(Block 192)**. If the other ASMs agreed, the appointed ASM creates a request message (of POOL IDEA) to other ASMs and asks them to send ideas allocating their agents to sub-actions of the selected recipe **(Block194).** The other ASMs create a replying message (of POOL IDEA type) with ideas for performing sub-actions. Now, the appointed ASM sends to the other ASMs an information message with the allocation of each of them for an appropriated sub-action (of ALLOCATE ACTION type). Now, the appointed ASM of each sub-action continues the start the loop again **(Block 187).** All the messages created by the ASM during the planning process are sent by the ASM at the execute phase **(Block 198).**

Also, as the Act phase is operated as a part of the think-act loop, at each activation of the act phase the ASM saves its last activation state (e.g., Start planning state, establishing mutual beliefs state, recipe selection state, allocation state) and continues its activation according to its state **(Blocks 185, 187, 191, 193).**

The ASMs can use negotiation methods to reach the agreement about the recipe and action allocation. In a case that mutual beliefs are not established or the ASMs did not reach to agreement, backtracking methods can be employed e.g., [Russell2010].

According to examples of the present invention, the ASM can operate in an automatic mode, in which the reasoning process is carried out by the ASM and a controlled mode in which at least some of or the entire reasoning process is carried out by other modules, such as by the agent or by a human controlling the agent. In the controlled mode, the ASM can be responsible to convert interaction between the agent and the ASMs. That is to say, the ASM can be configured to convert messages sent by other ASMs to the agent's language and *vice versa.*

It is appreciated that terminology such as "mandatory", "required", "need" and "must" refer to implementation choices made within the context of a particular implementation or application described herein for clarity and are not intended to be limiting since in an alternative implementation, the same elements might be defined as not mandatory and not required or might even be eliminated altogether.

It is appreciated that software components of the present invention including programs and data can, if desired, be implemented in ROM (read only memory) form including CD-ROMs, EPROMs and EEPROMs, or can be stored in any other suitable typically non-transitory computer-readable medium such as but not limited to disks of various kinds, cards of various kinds and RAMs. Components described herein as software can, alternatively, be implemented wholly or partly in hardware and/or firmware, if desired, using conventional techniques, and vice-versa. Each module or component can be centralized in a single location or distributed over several locations.

Included in the scope of the present invention, inter alia, arc electromagnetic signals carrying computer-readable instructions for performing any or all of the steps or operations of any of the methods shown and described herein, in any suitable order including simultaneous performance of suitable groups of steps as appropriate; machine-readable instructions for performing any or all of the steps of any of the methods shown and described herein, in any suitable order; program storage devices readable by machine, tangibly embodying a program of instructions executable by the machine to perform any or all of the steps of any of the methods shown and described herein, in any suitable order; a computer program product comprising a computer useable medium having computer readable program code, such as executable code, having embodied therein, and/or including computer readable program code for performing, any or all of the steps of any of the methods shown and described herein, in any suitable order: any technical effects brought about by any or all of the steps of any of the methods shown and described herein, when performed in any suitable order; any suitable apparatus or device or combination of such, programmed to perform, alone or in combination, any or all of the steps of any of the methods shown and described herein, in any suitable order; electronic devices each including a processor and a cooperating input device and/or output device and operative to perform in software any steps shown and described herein; information storage devices or physical records, such as disks or hard drives, causing a computer or other device to be configured so as to carry out any or all of the steps of any of the methods shown and described herein, in any suitable order; a program pre-stored e.g. in memory or on an information network such as the Internet, before or after being downloaded, which embodies any or all of the steps of any of the methods shown and described herein, in any suitable order, and the method of uploading or downloading such, and a system including server/s and/or client/s for using such: a processor configured to perform any combination of the described steps or to execute any combination of the described modules: and hardware which performs any or all of the steps of any of the methods shown and described herein, in any suitable order, either alone or in conjunction with software. Any computer-readable or machine-readable media described herein is intended to include non-transitory computer- or machine-readable media.

Any computations or other forms of analysis described herein can be performed by a suitable computerized method. Any step described herein can be computer-implemented. The invention shown and described herein can include (a) using a computerized method to identify a solution to any of the problems or for any of the objectives described herein, the solution optionally includes at least one of a decision, an action, a product, a service or any other information described herein that impacts, in a positive manner, a problem or objectives described herein: and (b) outputting the solution.

The system can, if desired, be implemented as a web-based system employing software, computers, routers and telecommunications equipment as appropriate.

Any suitable deployment can be employed to provide functionalities e.g. software functionalities shown and described herein. For example, a server can store certain applications, for download to clients, which are executed at the client side, the server side serving only as a storehouse. Some or all functionalities e.g. software functionalities shown and described herein can be deployed in a cloud environment. Clients, e.g. mobile communication devices such as smartphones can be operatively associated with but external to the cloud.

The scope of the present invention is not limited to structures and functions specifically described herein and is also intended to include devices which have the capacity to yield a structure, or perform a function, described herein, such that even though users of the device can not use the capacity, they are, if they so desire, able to modify the device to obtain the structure or function.

Features of the present invention which are described in the context of separate embodiments can also be provided in combination in a single embodiment. For example, a system embodiment is intended to include a corresponding process embodiment. Also, each system embodiment is intended to include a server-centered "view" or client centered "view", or "view" from any other node of the system, of the entire functionality of the system, computer-readable medium, apparatus, including only those functionalities performed at that server or client or node. Features can also be combined with features known in the art and particularly although not limited to those described in the Background section or in publications mentioned therein.

Conversely, features of the invention, including method steps, which are described for brevity in the context of a single embodiment or in a certain order can be provided separately or in any suitable subcombination. including with features known in the art (particularly although not limited to those described in the Background section or in publications mentioned therein) or in a different order, "e.g." is used herein in the sense of a specific example which is not intended to be limiting. Devices, apparatus or systems shown coupled in any of the drawings can in fact be integrated into a single platform in certain embodiments or can be coupled via any appropriate wired or wireless coupling such as but not limited to optical fiber. Ethernet, Wireless LAN, HomePNA, power line communication, cell phone, PDA, Blackberry GPRS. Satellite including GPS, or other mobile delivery.

It is appreciated that in the description and drawings shown and described herein, functionalities described or illustrated as systems and sub-units thereof can also be provided as methods and steps therewithin, and functionalities described or illustrated as methods and steps therewithin can also be provided as systems and sub-units thereof. The scale used to illustrate various elements in the drawings is merely exemplary and/or appropriate for clarity of presentation and is not intended to be limiting.

The disclosure of this application also includes the following numbered clauses:
Clause 1. A method for creating a subnetwork within a computerized network, the method comprising:
   forming a virtual entity (hereinafter ASM) representative of an agent linked to the network, the ASM including first data relating to an environment state of the agent, second data relating to at least one desire of the agent, and third data relating to at least one capability of the agent; and
   providing the ASM with an ability to link to other ASMs to form subnetworks with the at least one entity in accordance with the first second and third data.
Clause 2. The method of clause 1, additionally comprising: linking the ASM with at least a second ASM to form a first subnetwork.
Clause 3. The method of clause 2, further comprising receiving an update regarding said at least one of the first, second or third data and linking the ASM with at least one third virtual entity to form a second subnetwork.
Clause 4. The method of clause 2 further comprising providing the ASM with an ability to interact with the agent associated therewith.
Clause 5. The method of clause 1 wherein said step of forming said ASM further comprising receiving from said agent a new registration request, including said first second and third data related to said agent and creating an interface with said Agent.
Clause 6. The method of clause 1 wherein said step of providing the ASM with an ability to link includes a social interaction and reasoning process.
Clause 7. The method of clause 6 wherein said social interaction and reasoning process includes updating beliefs of said agent, establishing at least one desire of said agent.
Clause 8. The method of clause 7 wherein said beliefs includes dynamic beliefs and static beliefs.
Clause The method of clause 8 wherein said dynamic beliefs includes dynamic social beliefs and dynamic environmental beliefs related to environment states of said agent.
Clause 10. The method of clause 8 wherein said dynamic beliefs includes individual beliefs referring to input regarding said agent and mutual beliefs referring to input regarding at least one agent associated with said at least one second ASM.
Clause 11. The method of clause 7 wherein said establishing at least one desire includes reasoning, in accordance with said beliefs, about a preferable desire and at least one second ASM associated with a second agent capable of facilitating said ASM achieving said desire
Clause 12. The method of clause 11 wherein said social interaction and reasoning process further includes an act phase during which intentions of said agent for achieving the preferable desire are determined.
Clause 13. The method of clause 12 wherein said act phase further includes forming messages for said at least one second ASM.
Clause 14. The method of clause 11 wherein said social interaction and reasoning process further includes an execution phase during which output data is sent to said agent and to said at least one second ASM.
Clause 15. The method of clause 14 wherein said output data includes at least one primitive action to be executed by said agent.
Clause 16. The method of clause 7 wherein said establishing at least one desire further comprises computing the utility of each desire in a desires list of said agent.
Clause 17. The method of clause 7 wherein said establishing at least one desire further comprises reasoning about the best way to achieve said desire and determining whether or not said desire is to be achieved with at least one second ASM associated with a second agent capable of facilitating the ASM achieving said desire.
Clause 18. The method of clause 7 wherein said establishing at least one desire further comprises detecting desire of said at least one second agent associated with said at least one second ASM.
Clause 19. The method of clause 7 wherein said establishing at least one desire further comprises updating said beliefs regarding the possibility to achieve said desire.
Clause 20. The method of clause 11 wherein said social interaction and reasoning process further includes an act phase during which intentions of said agent for achieving the preferable desire are determined.
Clause 21. The method of clause 13 wherein said messages comprises identification of said ASM identification; identification of said second ASM; and indication regarding said desire. Clause 22. A system for creating a subnetwork within a computerized network, the system comprising:
   a processor;
   a plurality of modules including instructions for execution by said processor, said modules comprising:
      a first module for forming a virtual entity (hereinafter ASM) representative of an agent linked to the network, the virtual entity including first data relating to an environment state of the agent, second data relating to at least one desire of the agent, and third data relating to at least one capability of the agent; and
      a second module for providing the ASM with an ability to link to other ASMs to form subnetworks with the at least one ASM in accordance with the first second and third data. Clause 23. The system according to Clause 22 further comprising a data base and a module for establishing communication between said ASM and said at least a second ASM.
Clause 24. The system according to Clause 22 wherein said first module further comprises an interaction interface for interaction with said agent and said second module comprises a social interaction and reasoning process for interaction with said second ASM.
Clause 25. The system according to Clause 24 wherein said interaction interface is configured to convert communication with said agent between a data-structure communication and a communication language of said agent.
Clause 26. The system according to Clause 22 further comprising social services module including a common communication media.
Clause 27. The system according to Clause 26 wherein said social services module is configured to store, retrieve and update dynamic data related to a changing environment of said agent and said at least second agent.
Clause 28. The system according to Clause 27 wherein said social services module further includes data services module configured to store, retrieve and update static beliefs related to an environment of said agent which allows said ASM to determine ways to achieve said at least one desire.
Clause 29. The system according to Clause 28 wherein said data services further include data relating to at least one capability of said agent.
Clause 30. The system according to Clause 29 wherein said data services further include at least one of the following data: description of domain actions including data relating to primitive and non-primitive action; data related to environment of the state; a library of recipes to achieve non-primitive actions; data regarding desires.
Clause 31. The system according to Clause 22 further comprising agent services module configured for interaction with said agent and for retrieving and updating dynamic data about said agent.
Clause 32. The system according to Clause 31 wherein said agent services module is configured for sending command messages to said agent.
Clause 33. The system according to Clause 24 wherein said second module is configured to operate in an automatic mode, in which said reasoning process is carried out by said second module, and a controlled mode in which at least some of or the entire reasoning process is carried out externally to said ASM.
Clause 34. A computerized method for forming interrelationships between a plurality of agents on at least one computerized device, the method comprising:
   forming a plurality virtual entities (hereinafter ASM) each representative of one of the agents, the ASM including first data relating to an environment state of the agent, second data relating to at least one desire of the agent, and third data relating to at least one capability of the agent; and
   providing the ASM with an ability to select at least one other ASM representative of a second agent so as to form interrelationships therewith, said selection is carried out in accordance with the first second and third data.

## Claims

1. A method for creating a subnetwork within a computerized network, the method comprising:
forming at least a first and second computerized component,
wherein the first computerized component is configured to communicate with a first robotic agent and the second computerized component is configured to communicate with a second robotic agent,
wherein the first and second computerized components each include at least first, second, and third data,
wherein the first data of a given computerized component relates to an environment state of the robotic agent the given computerized component is configured to communicate with,
wherein the second data of a given computerized component relates to at least one desire of the robotic agent the given computerized component is configured to communicate with,
wherein the third data of a given computerized component relates to at least one capability of the robotic agent the given computerized component is configured to communicate with; and
linking the first computerized component to at least the second computerized component to form a first subnetwork.

2. The method of claim 1, wherein:
each robotic agent comprises at least one sensor to perceive its environment and at least one actuator to act upon its environment;
the at least one capability is at least one capability to execute an action; and
each desire is achievable by at least one robotic agent executing at least one action.

3. The method of claim 2, wherein the actuator is a motor.

4. The method of 3, wherein the first computerized component is linked to at least the second computerized component to form a subnetwork in response to:
determining, by the first computerized component, that at least one action that achieves a select desire of the first robotic agent requires at least two robotic agents to each execute a different sub-action of the at least one action that achieves the select desire; and
detecting, by the first computerized component, that the second data of the second computerized component includes the select desire.

5. The method of claim 4, wherein the method further comprises:
sending, by the first or second computerized component to the other of the first and second computerized component, a message allocating a sub-action of the at least one action that achieves the select desire;
sending, by the first computerized component to the first robotic agent, a request to execute in the environment of the first robotic agent a first sub-action of the allocated sub-actions;
sending, by the second computerized component to the second robotic agent, a request to execute in the environment of the second robotic agent a second sub-action of the allocated sub-actions;
executing, by the first robotic agent, the first sub-action of the allocated sub-actions; and
executing, by the second robotic agent, the second sub-action of the allocated sub-actions.

6. The method of claim 5, wherein the first computerized component detects that the second data of the second computerized component includes the select desire by announcing to the network about the select desire or looking for computerized components that already announced the select desire.

7. The method of claim 6, wherein the first, second, and third data of each computerized component is stored on one or more tangible or intangible computer readable media.

8. The method of claim 7, wherein forming a computerized component for a given robotic agent comprises:
receiving from the given robotic agent a registration request, wherein the registration request includes said first, second, and third data; and
configuring the computerized component to communicate with the given agent.

9. The method of claim 8, further comprising:
sending from the first computerized component to the first robotic agent a request for information about the first robotic agent's environment;
receiving at the first computerized component the requested information from the first robotic agent; and
selecting, by the first computerized component, in accordance with said information, the select desire.

10. The method of claim 9, wherein selecting the select desire comprises computing the utility of each desire of the at least one desire of the first robotic agent.

11. The method of claim 10, wherein the computerized components are configured to communicate with the first and second robotic agents using different protocols, wherein the computerized components are configured to communicate with each other using the same protocol.

12. A system for creating a subnetwork within a computerized network, the system configured to:
form at least a first and second computerized component,
wherein the first computerized component is configured to communicate with a first robotic agent and the second computerized component is configured to communicate with a second robotic agent,
wherein the first and second computerized components each include at least first, second, and third data,
wherein the first data of a given computerized component relates to an environment state of the robotic agent the given computerized component is configured to communicate with,
wherein the second data of a given computerized component relates to at least one desire of the robotic agent the given computerized component is configured to communicate with,
wherein the third data of a given computerized component relates to at least one capability of the agent the given computerized component is configured to communicate with; and
link the first computerized component to at least the second computerized component to form a first subnetwork.

13. The system of claim 12, wherein:
each robotic agent comprises at least one sensor to perceive its environment and at least one actuator to act upon its environment;
the at least one capability is at least one capability to execute an action; and
each desire is achievable by at least one robotic agent executing at least one action.

14. The system of 13, wherein the first computerized component is linked to at least the second computerized component to form a subnetwork in response to:
determining, by the first computerized component, that at least one action that achieves a select desire of the first robotic agent requires at least two robotic agents to each execute a different sub-action of the at least one action that achieves the select desire; and
detecting, by the first computerized component, that the second data of the second computerized component includes the select desire.

15. The system of claim 14, wherein the method further comprises:
sending, by the first or second computerized component to the other of the first and second computerized component, messages allocating different sub-actions of the at least one action that achieves the select desire to the first and second computerized components;
sending, by the first computerized component to the first robotic agent, a request to execute in the environment of the first robotic agent a first sub-action of the allocated sub-actions;
sending, by the second computerized component to the second robotic agent, a request to execute in the environment of the second robotic agent a second sub-action of the allocated sub-actions;
executing, by the first robotic agent, the first sub-action of the allocated sub-actions; and
executing, by the second robotic agent, the second sub-action of the allocated sub-actions.
